# EUROPEAN PATENT SPECIFICATION

(11) **EP 1 707 836 B1**
(45) Date of publication and mention of the grant of the patent: **08.09.2010**
(21) Application number: 06251784.2
(22) Date of filing: 30.03.2006
(51) Int. Cl.: F16D 23/12

(54) **Clutch release structure**
Kupplungsausrüstvorrichtung
Dispositif débrayeur

(30) Priority: 30.03.2005 JP 2005099951
(43) Date of publication of application: 04.10.2006
(73) Proprietor: Toyota Jidosha Kabushiki Kaisha, Toyota-shi, Aichi-ken, 471-8571 (JP)
(72) Inventor: Kato, Junichi, c/o Toyota Jidosha Kabushiki Kaisha, Toyota-shi Aichi-ken 471-8571 (JP); Kano, Tomoyuki c/o Toyota Jidosha Kabushiki Kaisha, Toyota-shi Aichi-ken 471-8571 (JP)
(74) Representative: Albutt, Anthony John

(56) References cited:
- DE-A1- 1 957 480
- JP-A- 2005 265 042
- JP-A- 2006 275 140
- US-A- 6 123 181

## Description

The present invention relates to a clutch release structure.

Conventionally, a clutch release structure has been available that includes a clutch release fork and a support. The fork has a concave surface, and the support has a spherical distal portion that supports the concave surface. The fork pivots to engage and disengage the clutch (for example, Japanese Examined Patent Publication No. 6-80336B).

In the above structure, foreign matter in the clutch housing or foreign matter and water that enter the clutch housing can enter the sliding portion of the fork and the support. Thus, a boot is provided to surround the support to prevent foreign matter and water from entering the sliding portion. Such a boot is attached by fitting one end to a groove formed in the fork and fixing the other end of the boot to the support.

Since the fork has a function to transmit force applied to one of its ends by manipulation of a clutch pedal or an automatic actuator to the clutch, the fork is required have sufficient strength to bear such transmission. Also, the fork has a relatively complicated shape with, for example, the concave surface at the sliding portion with the support. Thus, the fork is typically formed by casting iron material.

In recent years, to reduce the weight and costs of forks, pressed forks are increasingly used in place of cast forks. Pressed forks are formed by pressing a metal plate. Since a pressed fork has a lower strength compared to a cast fork, which is relatively thick, the durability can be degraded when a boot is attached in the above described manner. It is thus difficult to attach a boot to the support in a clutch release structure employing a pressed fork.

In a case where a boot is attached to the support of a cast fork, the fork and the support need to be subject to special machining.

US 6123181 discloses an articulation head for a clutch-release rocker arm of a friction clutch according to the preamble of claim 1. DE 1957480 discloses a universal joint arranged to provide low friction resistance to movement.

An embodiment of the present invention seeks to provide a clutch release structure having a support to which a boot is attached, which structure requires no special machining.

Aspects of the invention are set out in the accompanying claims.

The present invention provides a clutch release structure according to claim 1.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a partial cross-sectional view illustrating a clutch release structure according to one embodiment of the present invention;
Fig. 2 is a front view illustrating the clutch release fork of the clutch release structure shown in Fig. 1;
Fig. 3 is a cross-sectional view illustrating the structure of the boot of the clutch release structure shown in Fig. 1;
Fig. 4 is a plan view illustrating a procedure for attaching the boot to a transaxle case;
Fig. 5 is a cross-sectional view taken along line 5-5 in Fig. 4;
Fig. 6 is a cross-sectional view illustrating a clutch release structure according to a modified embodiment of the present invention;
Fig. 7 is a front view illustrating a clutch release fork and a clip of a clutch release structure according to a modified embodiment of the present invention;
Fig. 8 is a cross-sectional view illustrating a boot of a clutch release structure according to a modified embodiment of the present invention; and
Fig. 9 is a cross-sectional view illustrating a clutch release structure according to another modified embodiment of the present invention.

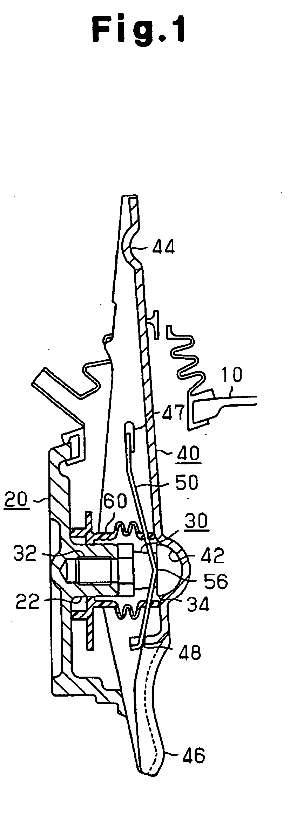

One embodiment of the present invention will now be described with reference to Figs. 1 to 5.

With reference to Fig. 1, a clutch (not shown) is provided in a space defined by a clutch housing 10, a transaxle case 20, and other components. A cylindrical attachment boss 22 for receiving a support 30 is formed on the case 20. The support 30 is attached to the case 20 by screwing a threaded portion 32 of the support 30 to the attachment boss 22. The transaxle case 20 and the support 30 are formed of metal such as aluminum.

The support 30 has a semispherical distal portion 34. A concave surface 42 formed in a clutch release fork 40 is supported by the distal portion of the support 30. Grease is applied to the sliding portion between the concave surface 42 and the distal portion 34. The fork 40 also has a recess 44 and a pair of contact portions 46. When force from a clutch release cylinder is applied to the recess 44 based on manipulation of a clutch pedal (not shown), the fork 40 pivots about the distal portion 34. The force is then transmitted to the clutch from the contact portions 46. The fork 40 is formed by pressing a metal plate such as a stainless plate, has a thickness of approximately 3.5 mm.

Apertures 47, 48 for receiving a clip 50 are formed in the fork 40. The clip 50 is attached to the fork 40 by engaging end sections with the apertures 47, 48. The clip 50 is made of a metal material having elastic force, and has a bent portion 56. The bent portion 56 presses the distal portion 34 of the support 30 to prevent the fork 40 from falling off the support 30.

A boot 60 is attached to and surround the support 30. One end of the boot 60 contacts the fork 40, while the other end contacts the case 20. The end that contacts the case 20 is loosely fitted with the attachment boss 22. The boot 60 is made of, for example, rubber or a synthetic resin.

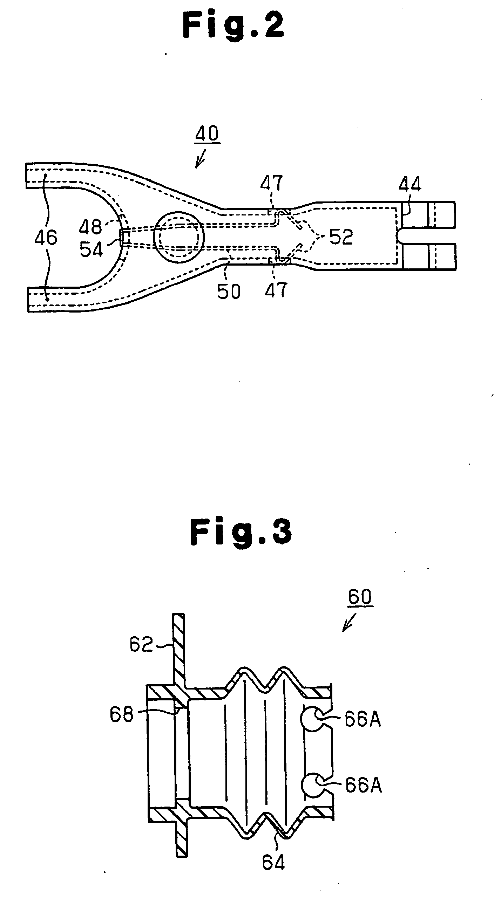

Fig. 2 illustrates the structure of the fork 40 and the clip 50.

As shown in Fig. 2, the fork 40 is bifurcated. Sections close to the distal ends function as the contact portions 46. The aperture 48 for leading the clip 50 is formed in a center of the bifurcated portion. The apertures 47 are formed on side surfaces of the fork 40.

The clip 50 is U-shaped. The clip 50 has a pair of engagement portions 52 at the open end of the U-shape. The engagement portions 52 elastically engage with the apertures 47. The clip 50 also has a hook portion 54 at the bent section. The hook portion 54 is hooked to an end face of the center of the bifurcated portion of the fork 40. The clip 50 is attached to the fork 40 by engaging the engagement portions 52 with the apertures 47 and hooking the hook portion 54 on the center end face of the bifurcated portion. When attaching the fork 40 and the clip 50 to the support 30, the distal portion 34 of the support 30 is pressed into a space between the two linear portions of the clip 50.

Fig. 3 illustrates the structure of the boot 60.

As shown in Fig. 3, the boot 60 has a flange 62 that projects radially outward from the outer circumferential surface. The boot 60 has an accordion portion 64 in a middle portion. The accordion portion 64 has alternately arranged large diameter sections and small diameter sections.

Notches 66A, 66B (the notches 66B are not shown) are formed at an end of the boot 60 that corresponds to the fork 40. The clip 50 is fitted with the notches 66A, 66B. Each of the notches 66A, 66B has the narrowest section at the middle portion, and a circular portion at the distal end. The width and the size of the circular portion is equivalent to or slightly less than the diameter of the clip 50. The lengths of the notches 66A, 66B are minimum lengths that allow the end of the boot 60 contacts the fork 40 when the clip 50 is fitted with the notches 66A, 66B in a state where the fork 40 and the clip 50 are attached to the support 30. That is, the lengths of the notches 66A, 66B are determined such that, when the components are assembled, no space exists between the end of the boot 60 and the fork 40, and no space exists at the distal portion of each notch with respect to the clip 50.

The boot 60 has a small diameter portion 68 at a position slightly spaced from the end corresponding to the case 20. The small diameter portion 68 has a slightly smaller inner diameter than those of other sections. The inner diameter of the small diameter portion 68 is equivalent or slightly less than the outer diameter of the attachment boss 22.

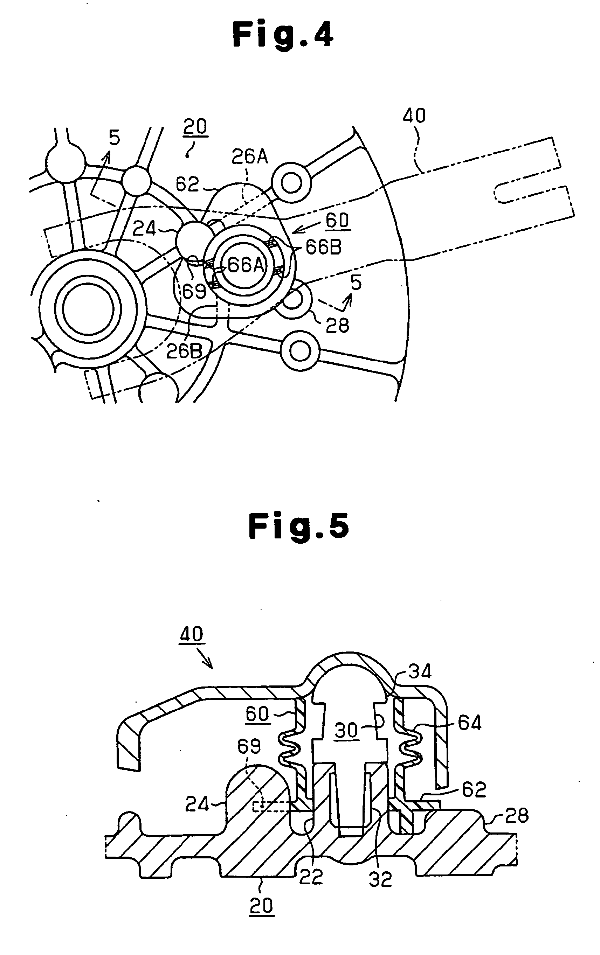

Fig. 4 illustrates an attached state of the case 20 and the boot 60.

As shown in Fig. 4, a position determining notch 69 is formed in the boot 60. The shape and size of the notch 69 correspond to a projection 24. Specifically, the width of the notch 69 at the section contacting the projection 24 is substantially equal to the outer diameter of the projection 24. When the notch 69 is engaged with the projection 24, the position of the boot 60 relative to the case 20 is determined. The projection 24 is formed when forming a female thread portion on the back surface of the case 20.

Ribs 26A, 26B and a projection 28 formed on the case 20 contact the flange 62 of the boot 60. That is, the flange 62 is engaged with the projection 24 in the notch 69 and contacts another projection of the case 20.

When the fork 40 and the clip 50 (not shown in Fig. 4) are attached to the support 30 (not shown in Fig. 4), the two linear portions of the U-shape of the clip 50 are fitted with the notches 66A, 66B, respectively. Since the relative position between the case 20 and the fork 40 (the clip 50) has been determined, the position of the boot 60 with respect to the case 20 is determined by fitting the clip 50 with the notches 66A, 66B.

Fig. 5 is a cross-sectional view taken along line 5-5 in Fig. 4.

The boot 60 is pressed downward as viewed Fig. 5 by the fork 40 and receives the pressing force by contracting the accordion portion 64. The end of the boot 60 that corresponds to the fork 40 contacts the fork 40 with a right amount of pressure. Likewise, the end of the boot 60 that corresponds to the case 20 contacts the case 20 with a right amount of pressure.

As shown in Fig. 5, between the attachment boss 22 and the projection 24, there exists an area in which the end of the boot 60 does not contact the case 20. That is, since, depending on the shape of the case 20, some sections of the case 20 cannot be brought into contact with the boot 60, the end of the boot 60 is shaped to avoid such sections.

The clutch release structure according to the above illustrated embodiment provides the following advantages.
(1) One end of the boot 60 contacts the fork 40, and the other end of the boot 60 is engaged with the attachment boss 22 of the support 30. Thus, the boot 60 is attached to the support 30 without subjecting the fork 40, the support 30, and the attachment boss 22 to special machining.
(2) Since the end of the boot 60 that corresponds to the case 20 contacts the case 20, foreign matter and water are effectively prevented from entering the boot 60.
(3) Since the fork 40 requires no special machining in this embodiment, the boot 60 can be attached to a clutch release structure having a pressed fork.
(4) Since the fork 40 is likely to fall off the support 30 when the clutch release structure is being transported, the clutch release structure has the clip 50. Since the clip 50 needs to be fixed to one of the fork 40 and the support 30 and support the other, the clip 50 can hinder the attachment of the boot 60 to the support 30. However, in this embodiment, since the clip 50 is fitted with the notches 66A, 66B formed in the boot 60, a boot can be attached to a clutch release structure having the clip 50.
(5) The boot 60 has the flange 62 with the position determining notch 69, and the notch 69 is fitted with the projection 24 of the case 20. Thus, the position of the boot 60 relative to the case 20 is accurately determined.
(6) In sections other than the notch 69, the flange 62 contacts the ribs 26A, 26B of the case 20 and the projection 28. Thus, the boot 60 is stably held with respect to the case 20.
(7) The lengths of the notches 66A, 66B of the boot 60 are minimum lengths that allow the end of the boot 60 contacts the fork 40 when the clip 50 is fitted with the notches 66A, 66B in a state where the fork 40 and the clip 50 are attached to the support 30. Therefore, when the components are assembled, no space exists between the end of the boot 60 and the fork 40, and no space exists at the distal portion of each notch with respect to the clip 50. As a result, the boot 60 increases the hermeticity of the support 30.
(8) The boot 60 has the small diameter portion 68 at a position slightly spaced from the end corresponding to the case 20. The small diameter portion 68 has a slightly smaller inner diameter than those of other sections. The inner diameter of the small diameter portion 68 is equivalent or slightly less than the outer diameter of the attachment boss 22. As a result, the small diameter portion 68 is fitted with the attachment boss 22 with no clearance. Therefore, the boot 60 further increases the hermeticity of the support 30.
(9) Since the relative position between the case 20 and the fork 40 (the clip 50) has been determined, the position of the boot 60 with respect to the case 20 is determined by fitting the clip 50 with the notches 66A, 66B. That is, the notches 66A, 66B are used for determining the position of the boot 60 with respect to the case 20.
(10) Between the attachment boss 22 and the projection 24, there exists an area in which the end of the boot 60 does not contact the case 20. Thus, irrespective of the shape of the case 20, the boot 60 can be attached to the support 30 while causing a part of the end of the boot 60 to contact the case 20.

The embodiment of Figs. 1 to 5 may be modified as shown below.

In the embodiment of Figs. 1 to 5, the boot 60 has the accordion portion 64. However, if the boot 60 is made of an elastic material, the accordion portion 64 may be omitted.

In the embodiment of Figs. 1 to 5, the flange 62 contacts the ribs 26A, 26B and the projection 28, and the end of the boot 60 contacts the case 20. However, it may be configured that only the flange 62 contacts the ribs 26A, 26B and the projection 28, while the end of the boot 60 does not contact the case 20.

The flange 62 may contact any projections other than projections such as ribs and female threaded portion of the case 20. For example, the flange 62 may contact a boss formed on the case 20.

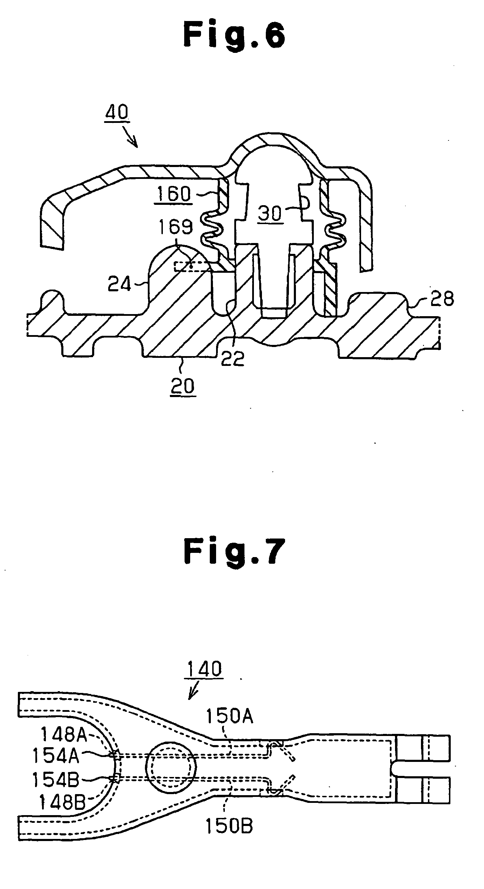

A configuration shown in Fig. 6 may be employed. In this configuration, the flange 62 does not contact the projection 28. A position determining notch 169 is fitted with the projection 24 so that the position of the boot 160 in relation to the case 20 is determined.

Projections that are fitted with the position determining notches 69, 169 do not need to be projections formed when female threaded portions are formed on the back surface of the case 20, but may be any projections such as a boss formed on the case 20.

As shown in Fig. 7, a fork 140 to which separate clips 150A, 150B are attached may be employed. In this case, apertures 148A, 148B for leading the clips 150A, 150B, respectively, are formed in the fork 140, and the clips 150A, 150B have hook portions 154A, 154B, respectively.

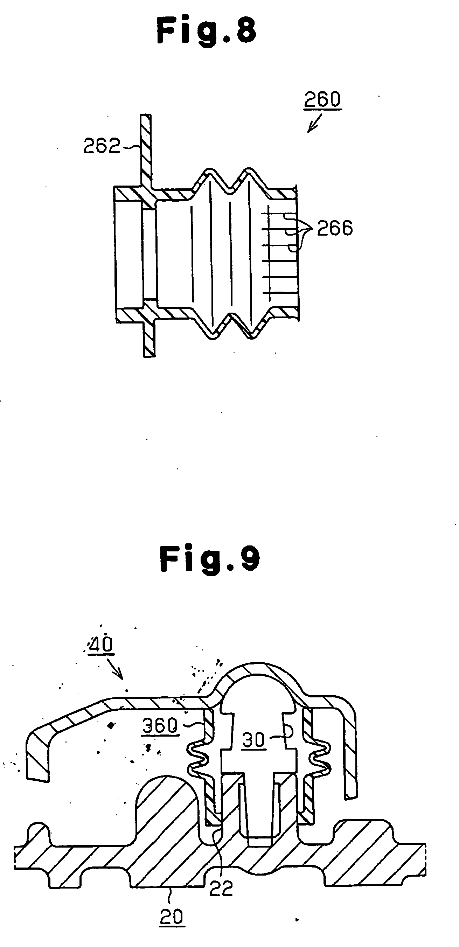

In the embodiment of Figs. 1 to 5, the notches 66A, 66B are formed to receive the two linear portions of the U-shape of the clip 50, respectively. However, as shown in Fig. 8, a boot 260 having a number of notches 266 may be employed. In this case, the position of the boot 260 in relation to the case 20 is determined by forming a position determining notch in a flange 262 of the boot 260.

In the embodiment of Figs. 1 to 5, a part of the end of the boot 60 does not contact the case 20. However, the end of the boot 60 may conform to the uneven shape of the case. In this configuration, since the end of the boot contacts the case without any clearance, entry of foreign matter and water into the boot is further effectively prevented.

In the embodiment of Figs. 1 to 5, the end of the boot 60 that corresponds to the case 20 is loosely fitted with the attachment boss 22 and contacts the case 20. However, the end may be fitted with the attachment boss 22 with no clearance and contact the case 20.

In the embodiment of Figs. 1 to 5, the boot 60 has the flange 62 with the position determining notch 69. However, the position determining notch 69 or the flange 62 itself may be omitted.

In the embodiment of Figs. 1 to 5, the present invention is applied to the fork 40 to which the clip 50 is attached. However, the present invention may be applied to a fork from which a clip has been removed or to a fork having no clip. In this case, a notch with which a clip is fitted may be omitted from the boot.

In the embodiment of Figs. 1 to 5, the end of the boot 60 that corresponds to the case 20 is loosely fitted with the attachment boss 22 and contacts the case 20. However, a boot 360 shown in Fig. 9 may be employed. In the boot 360, only the end corresponding to the case 20 is fitted with the attachment boss 22, but does not contact the case 20.

In the embodiment of Figs. 1 to 5, the present invention is applied to a pressed fork. However, the present invention may be applied to a cast fork. In this case, the fork and the support do not need to be subjected to special machining for attaching a boot to the support.

## Claims

1. A clutch release structure comprising: a clutch release fork (40) on which a concave surface (42) is formed; a support (30) having a semispherical distal portion (34), the distal portion (34) supporting the concave surface (42); and a boot (60) surrounding the support (30), wherein support (30) is attached to a boss (22) formed on a transaxle case (20), and wherein
the boot (60) has a first end that contacts the fork (40) and a second end that is fitted with the boss (22), **characterised in that** the structure further comprises a clip (50) for preventing the fork (40) from falling off the support (30) and which is fixed to one of the fork (40) and the support (30) and supports the other; and
the first end of the boot (60) has a notch (66A, 66B) with which the clip (50) is fitted, the notch (66A, 66B) having a narrowest section at the middle portion in the longitudinal direction of the notch (66A, 66B), the clip (50) being fitted with an inner portion of the notch (66A, 66B) that extends from the narrowest section.

2. The structure according to claim 1, wherein the second end of the boot (60) contacts the case (20).

3. The structure according to claim 2, wherein the second end of the boot (60) is formed to conform to an uneven shape of the case (20).

4. The structure according to any one of claims 1 to 3, wherein the fork (40) is formed of a bent metal plate.

5. The structure according to any one of claims 1 to 4, wherein the boot (60) further has a flange (62) in which a notch (69) is formed, the notch (69) being engaged with a projection (24) of the case (20).

6. The structure according to claim 5, wherein the flange (62) contacts another projection (26A, 26B, 28) of the case (20).

## Patentansprüche

1. Kupplungslöseanordnung, mit: einer Kupplungslösegabel (40), an der eine konkave Fläche (42) ausgebildet ist; einer Stützeinrichtung (30) mit einem halbkugelförmigen distalen Abschnitt (34), wobei der distale Abschnitt (34) die konkave Fläche (42) stützt; und einem Balg (60), der die Stützeinrichtung (30) umgibt, wobei die Stützeinrichtung (30) an einer Nabe (22) befestigt ist,
die an einem Transaxlegehäuse (20) ausgebildet ist, und wobei
der Balg (60) ein erstes Ende, das die Gabel (40) berührt, und ein zweites Ende aufweist, das an die Nabe (22) angepasst ist, **dadurch gekennzeichnet, dass** die Anordnung ferner einen Clip (50) aufweist, um die Gabel (40) daran zu hindern, von der Stützeinrichtung (30) herabzufallen, und der an einem von der Gabel (40) und der Stützeinrichtung (30) befestigt ist und das andere stützt; und
wobei das erste Ende des Balgs (60) eine Aussparung (66A, 66B) aufweist, an der der Clip (50) eingepasst ist, wobei die Aussparung (66A, 66B) einen engsten Abschnitt an dem Mittelabschnitt in der Längsrichtung der Aussparung (66A, 66B) aufweist, wobei der Clip (50) an einem Innenabschnitt der Aussparung (66A, 66B) angepasst ist, der sich von dem engsten Abschnitt aus erstreckt.

2. Anordnung nach Anspruch 1, wobei das zweite Ende des Balgs (60) das Gehäuse (20) berührt.

3. Anordnung nach Anspruch 2, wobei das zweite Ende des Balgs (60) ausgebildet ist, um sich an eine unebene Form des Gehäuses (20) anzupassen.

4. Anordnung nach einem der Ansprüche 1 bis 3, wobei die Gabel (40) aus einer gebogenen Metallplatte ausgebildet ist.

5. Anordnung nach einem der Ansprüche 1 bis 4, wobei der Balg (60) ferner einen Flansch (62) aufweist, in dem eine Aussparung (69) ausgebildet ist, wobei die Aussparung (69) mit einem Vorsprung (24) des Gehäuses (20) in Eingriff steht.

6. Anordnung nach Anspruch 5, wobei der Flansch (62) einen anderen Vorsprung (26A, 268, 28) des Gehäuses (20) berührt.

## Revendications

1. Structure de débrayage comprenant : une fourche de débrayage (40) sur laquelle une surface concave (42) est formée ; un support (30) ayant une partie distale semi-sphérique (34), la partie distale (34) supportant la surface concave (42) ; et un capuchon (60) entourant le support (30), où le support (30) est fixé à un bossage (22) formé sur un carter de transaxe (20), et où
le capuchon (60) a une première extrémité qui se met en contact avec la fourche (40) et une deuxième extrémité qui est ajustée avec le bossage (22), **caractérisé en ce que** la structure comprend en outre une attache (50) pour empêcher la fourche (40) de tomber du support (30) et qui est fixée à l'un de la fourche (40) et du support (30) et qui supporte l'autre ; et
la première extrémité du capuchon (60) a une encoche (66A, 66B) avec laquelle l'attache (50) est ajustée, l'encoche (66A, 66B) ayant une section la plus proche au niveau de la partie médiane dans la direction longitudinale de l'encoche (66A, 66B), l'attache (50) étant ajustée avec une partie interne de l'encoche (66A, 66B) qui s'étend de la section la plus proche.

2. Structure selon la revendication 1, dans laquelle la deuxième extrémité du capuchon (60) est en contact avec le carter (20).

3. Structure selon la revendication 2, dans laquelle la deuxième extrémité du capuchon (60) est formée de manière à s'adapter à une forme irrégulière du carter (20).

4. Structure selon l'une quelconque des revendications 1 à 3, dans laquelle la fourche (40) est formée d'une plaque métallique pliée.

5. Structure selon l'une quelconque des revendications 1 à 4, dans laquelle le capuchon (60) a en outre une bride (62) dans laquelle une encoche (69) est formée, l'encoche (69) étant engagée avec une projection (24) du carter (20).

6. Structure selon la revendication 5, dans laquelle la bride (62) est en contact avec une autre projection (26A, 26B, 28) du carter (20).
